Europäisches Patentamt

European Patent Office

Office européen des brevets

(19)

(11) Publication number: **0 041 530**
**B1**

# EUROPEAN PATENT SPECIFICATION

(12)

(45) Date of publication of patent specification: **23.03.83**

(51) Int. Cl.³: **G 01 M 3/26**

(21) Application number: **81900022.5**

(22) Date of filing: **04.12.80**

(86) International application number:
**PCT/SE80/00316**

(87) International publication number:
**WO 81/01744 25.06.81 Gazette 81/15**

(54) **Fluid-tightness testing of large vessels.**

(30) Priority: **06.12.79 SE 7910074**

(43) Date of publication of application:
**16.12.81 Bulletin 81/50**

(45) Publication of the grant of the patent:
**23.03.83 Bulletin 83/12**

(84) Designated Contracting States:
**AT CH DE FR GB LI LU NL**

(56) References cited:
**FR - A - 1 474 553**
**US - A - 2 936 611**
**US - A - 3 839 900**
**US - A - 3 931 731**

(73) Proprietor: **NOLEK SYSTEM AB**
**Segersbyvägen 4**
**S-145 63 Norsborg (SE)**

(72) Inventor: **BERGSTRAND, Gunnar**
**Norrskogsvägen 128**
**S-145 72 Norsborg (SE)**
Inventor: **LÖÖF, Bert**
**Algrytevägen 99**
**S-127 32 Skärholmen (SE)**

(74) Representative: **Modin, Jan et al,**
**c/o Axel Ehrners Patentbyra AB Smalandsgatan 2**
**S-114 34 Stockholm (SE)**

Courier Press, Leamington Spa, England

Fluid-tightness testing of large vessels

The invention relates to a method and a device for testing the fluid-tightness of large vessels, such as water-heaters, central heating vesels, heat exchangers, compressed air vessels, gas containers, etc.

Many different methods for fluid-tightness testing of large vessels or containers are known. Thus, in the Swedish patent specification 205 768 a testing method is described, according to which the vessel is filled with liquid, and the liquid pressure is increased continuously and the relation between the pressure and the volume is registered. As soon as the slope of the pressure-volume curve changes, the pressure increase is interrupted, and it is established that a leakage exists. This method is of course applicable for large leaks, whereas minor leaks are difficult to detect.

Moreover, pressure increase and pressure reduction methods are generally known involving the use of gas, in particular air, as an operating medium. According to the pressure reduction method, the test object and a reference container are filled with air up to the same pressure. Thereafter, the connection between the reference container and the test object is closed, and a possible difference between the pressures in the separate containers is measured after a predetermined time. This pressure difference constitutes a measure of the degree of leakage.

According to the pressure increase method, the test vessel is filled with pressurized air. Simultaneously, the test vessel is surrounded entirely or partly by a fixture, so that a sealed measuring volume is formed between the fixture and the test vessel. A possible pressure increase in the measuring volume indicates a leak, and even in this case the pressure measurement is performed after a predetermined time period. However, when testing rather large vessels, it has turned out that the measuring time is fairly long, which is obviously a disadvantage in serial production. It is in fact necessary to let the gas pressure become stabilized. Moreover, minor leaks cause only very small changes of the air pressure, and even sensitive measuring equipment does not react until a rather long time.

The object of the invention is, therefore, to accomplish a new fluid-tightness testing method enabling a quicker and more reliable tightness testing of large vessels or the like, particularly with respect to minor leaks.

This object is achieved by the use of a liquid during the fluid-tightness test, in particular water, as an operating fluid, i.e. the fluid with which the vessel is filled during the testing process, whereas the measuring is performed by means of a gas, especially air. During the measuring process, the liquid and the gas are kept under the same pressure in that they communicate with a pressure transfer device, e.g. a diaphragm box, wherein the chambers on each side of a flexible diaphragm contains the liquid and the gas, respectively.

The inventive method and device are defined further in the appended claims.

The advantages achieved by the invention to the feature that the fairly large test vessel is filled with a liquid, i.e. an incompressible fluid, whereas the pressure measuring is carried out by means of a gas, i.e. a compressible fluid. Thus, the testing process can be effected quickly, since a minor change of the liquid volume results in a relatively large pressure reduction, whereas the pressure measurements by means of the gas fluid can be carried out reliably and with great accuracy.

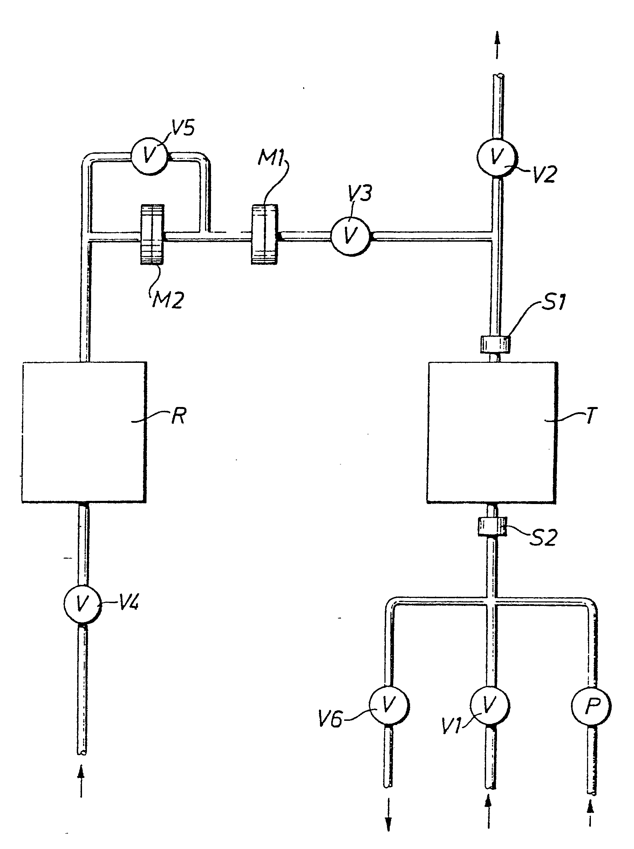

The invention is described further below with reference to the drawing, illustrating schematically a device for carrying out the inventive fluid-tightness testing method.

In the drawing, a test object T is thus shown schematically. The test object is connected by means of quick connectors S1, S2 at the top and the bottom, and pressurized water is supplied at the bottom via a first cut-off valve V1 (V6 is closed). During the filling process, the water rises in the vessel T and continues up through the upper connection S1 to a valve V2. Upon checking, preferably automatically, that the system is vented, the valve V2 is closed and a valve V3 is opened, so that the test object filled with water communicates with one half of the diaphragm box M1. Thereafter, the water pressure is raised to a predetermined, rather high level by means of a high pressure pump P, and the valve V1 is closed. At the other half of the diaphragm box M1, air pressure is applied in the following way:

A non-illustrated source of pressurized air (or a pressurized air system) is connected via a valve V4, which thereafter is kept closed. A predetermined, rather high air pressure, although somewhat lower than the liquid pressure generated by the high pressure pump P, now prevails in a reference container R and on both sides of the diaphragm in a differential pressure sensor M2 (a valve V5 is now open).

Upon the above-mentioned increase of the water pressure, the last-mentioned pressure is transferred via the diaphragm box M1, so that the air circuit as well as both sides of the differential pressure sensor M2 are exposed to said pressure.

If the test object breaks as a result of the pressure increase, the tightness test is of course concluded, and the entire operation is repeated for a new or repaired test object. If, on the other hand, the test object stands the pressure increase, the valve V5 is closed, and immediately thereafter exactly the same pressure (the predetermined pressure level generated by the pump P) is exerted on both sides of the diaphragm in the differential pressure sensor M2. When the valve V5 is closed, the tightness of minor leaks in the test object is started. During a predetermined adjustable time period, a possible leakage in the test object will cause a reduction of the water volume in the water circuit, thereby causing a fall of the water pressure as well as the air pressure between the diaphragms in M2 and M1. This pressure reduction can be detected by means of the differential pressure sensor M2 operating with high sensitivity.

If no pressure reduction is observed during the predetermined measuring time, the test object T can be considered tight, and the measuring is completed by opening the valves V2, V3 and V6, whereupon the valve V3 is closed again as soon as the water pressure drops. Thus, the water circuit and the test object T are emptied to permit a new test vessel to be connected and tightness tested. On the other hand, it has proven advantageous to maintain the originally applied air pressure in the air circuit, the diaphragm box M1 preferably being designed in such a way that the diaphragm, when deflected towards the water circuit, will contact a support surface to protect the diaphragm from plastical deformation or breakage.

The invention can now be applied in many different ways within the scope of the following claims. For example, an entire pipe system can also be tightness tested by the inventive method.

## Claims

1. A method for fluid-tightness testing of large vessels characterized in that a said vessel (T) is filled with liquid under pressure, that the pressure of the liquid, by means of a pressure transfer device (M1), is caused to influence the pressure in a closed gas circuit (R), and that a pressure reduction in the gas circuit is detected to establish whether leakage of liquid from said vessel has occurred.

2. A method as set forth in claim 1, characterized in that firstly the pressure in the gas circuit (R) is raised to a first pressure level, whereupon the vessel (T) is filled with a liquid and the liquid pressure is raised to a second pressure level exceeding said first pressure level.

3. A method as set forth in claim 1 or 2, characterized in that the detection of said pressure reduction is carried out by differential measurement (M2), the gas pressure in the closed gas circuit being first equalized in the entire gas circuit, whereupon the gas circuit is divided (V5) into a reference circuit portion (R) and a circuit portion (between M2 and M1) connected to said pressure transfer device (M1).

4. A device for fluid-tightness testing of large vessels, characterized by, on the one hand, a liquid circuit connectable (S1, S2) to a said vessel (T) in order to fill said vessel with liquid under pressure, and on the other hand a closed gas circuit (R) arranged in pressure transferring contact with the liquid circuit by means of a pressure transfer device (M1) and having a detecting means (M2) for detecting a pressure reduction in the gas circuit caused by leakage of liquid from said vessel.

5. A device as set forth in claim 4, characterized in that said pressure transferring device consists of a diaphragm box (M1), the diaphragm of which separates the liquid in the liquid circuit from the gas in the gas circuit.

6. A device as set forth in claims 4 or 5, characterized in that the gas circuit comprises a reference container (R), which is connected to one side of a differential pressure sensor (M2), whereas said pressure transferring device (M1) is connected to the other side of the differential pressure sensor (M2).

7. A device as set forth in claim 6, characterized in that a cut-off valve (V5) is inserted in a shunt conduit connected to both sides of the differential pressure sensor (M2).

## Patentansprüche:

1. Verfahren zum Prüfen großer Gefäße auf Druckdichtigkeit, dadurch gekennzeichnet, daß ein Gefäß (T) mit einer Flüssigkeit unter Druck gefüllt wird und der Druck der Flüssigkeit über eine Druckübertragungseinrichtung (M1) auf den Druck in einem geschlossenen Gaskreis (R) einwirkt, und daß ein Druckabfall im Gaskreislauf angezeigt wird um festzustellen, ob durch Undichtigkeit Flüssigkeit aus dem Gefäß entwichen ist.

2. Verfahren nach Anspruch 1, dadurch gekennzeichnet, daß zunächst der Druck im Gaskreis (R) auf einen ersten Wert gebracht wird, dann das Gefäß (T) mit einer Flüssigkeit gefüllt und darauf der Druck der Flüssigkeit auf einen über dem ersten liegenden zweiten Wert erhöht wird.

3. Verfahren nach Anspruch 1 oder 2, dadurch gekennzeichnet, daß der Druckabfall durch Differenzmessung (M2) ermittelt wird, wobei zunächst der Gasdruck im geschlossenen Gaskreis innerhalb des gesamten Gaskreises angeglichen wird, und dann der Gaskreis in einen Referenzteil (R) und einen an die Druckübertragungseinrichtung (M1) angeschlossenen Teil (zwischen M2 und M1) aufgeteilt (V5) wird.

4. Vorrichtung zum Prüfen großer Gefäße auf Druckdichtigkeit, gekennzeichnet einerseits durch einen Flüssigkeitskreis (S1, S2), der an ein Gefäß (T) anschließbar ist, um das Gefäß mit einer Flüssigkeit unter Druck zu füllen, und andererseits durch einen geschlossenen Gaskreis (R), der über eine Druckübertragungseinrichtung (M1) in druckübertragender Verbindung mit dem Flüssigkeitskreis steht und einen Detektor (M2) enthält, der einen Druckabfall im Gaskreis infolge des Entweichens von Flüssigkeit aus dem Gefäß ermittelt.

5. Vorrichtung nach Anspruch 4, dadurch gekennzeichnet, daß die Druckübertragungseinrichtung aus einer Membranbox (M1) besteht, deren Membran die Flüssigkeit im Flüssigkeitskreis vom Gas im Gaskreis trennt.

6. Vorrichtung nach Anspruch 4 oder 5, dadurch gekennzeichnet, daß der Gaskreis einen an eine Seite eines Differenzdruckfühlers (M2) angeschlossenen Bezugsbehälter (R) enthält, während die Druckübertragungseinrichtung (M1) and die andere Seite des Differenzdruckfühlers (M2) angeschlossen ist.

7. Vorrichtung nach Anspruch 6, gekennzeichnet durch ein Sperrventil (V5), das in eine Nebenschlußleitung eingefügt ist, die beiderseits des Differenzdruckfühlers (M2) angeschlossen ist.

## Revendications

1. Procédé pour vérifier l'étanchéité aux fluides de récipients de grande taille, caractérisé en ce que le récipient (T) est rempli par un liquide sous pression, que la pression du liquide est amenée à influer, au moyen d'un dispositif de transfert de pression (M1), sur la pression existante dans un circuit fermé de gaz (R) et qu'une diminution de pression dans le circuit du gaz est détectée afin d'établir s'il est apparu une fuite de liquide à partir dudit récipient.

2. Procédé selon la revendication 1, caractérisé en ce que tout d'abord la pression dans le circuit du gaz (R) est accrue à un premier niveau de pression, à la suite de quoi le récipient (T) est rempli avec un liquide, et la pression du liquide est accrue jusqu'à un second niveau de pression dépassant le premier niveau de pression.

3. Procédé selon l'une des revendications 1 ou 2, caractérisé en ce que la détection de ladite diminution de pression est réalisée au moyen d'une mesure différentielle (M2), la pression du gaz dans le circuit fermé du gas étant tout d'abord égalisée dans l'ensemble du circuit du gaz, à la suite de quoi le circuit du gaz est subdivisé (V5) en une partie de circuit de référence (R) et une partie de circuit (entre M2 et M1) raccordée audit dispositif de transfert de pression (M1).

4. Dispositif pour vérifier l'étanchéité aux fluides de récipients de grande taille, caractérisé par, d'une part, un circuit liquide susceptible d'être raccordé (S1, S2) audit récipient (T) de manière à remplir ce dernier de liquide sous pression, et, d'autre part, un circuit fermé de gaz (R) agencé en contact de transfert de pression avec le circuit liquide au moyen d'un dispositif de transfert de pression (M1) et possédant un dispositif de détection (M2) pour détecter une diminution de pression dans le circuit de gaz, provoquée par une fuite de liquide à partir dudit récipient.

5. Dispositif selon la revendication 4, caractérisé en ce que ledit dispositif de transfert de pression est constitué par un boîtier à diaphragme (M1) dont le diaphragme sépare le liquide du circuit liquide par rapport au gaz dans le circuit de gaz.

6. Dispositif selon l'une des revendications 4 ou 5, caractérisé en ce que le circuit de gaz comporte un conteneur du référence (R) qui est raccordé à un côté d'un capteur de pression différentielle (M2), tandis que ledit dispositif de transfert de pression (M1) est raccordé à l'autre côté du capteur de pression différentielle (M2).

7. Dispositif selon la revendication 6, caractérisé en ce qu'une valve de sectionnement (V5) est insérée dans une canalisation en dérivation raccordée des deux côtés du capteur de pression différentielle (M2).